# EUROPEAN PATENT SPECIFICATION

(11) **EP 1 787 880 B1**
(45) Date of publication and mention of the grant of the patent: **17.08.2011**
(21) Application number: 06024065.2
(22) Date of filing: 20.11.2006
(51) Int. Cl.: B60T 7/10

(54) **Park brake release mechanism and method of use**
Feststellbremslösemechanismus und -Verfahren zur Verwendung
Mécanisme de desserrage d'un frein de stationnement et procédé de son utilisation

(30) Priority: 18.11.2005 US 738260 P; 16.11.2006 US 560605
(43) Date of publication of application: 23.05.2007
(73) Proprietor: Dura Global Technologies, Inc., Rochester Hills, Michigan 48309 (US)
(72) Inventor: Pereira, Ryan, Rochester Hills Michigan 48307 (JP); Krupin, Vladimir, Clarkston Michigan 48346 (US); Raikes, Daniel, Warren Michigan 48346 (US)
(74) Representative: Gervasi, Gemma

(56) References cited:
- EP-A- 1 418 102
- EP-A1- 0 480 108
- DE-B3-102004 062 575

## Description

### RELATED APPLICATION

### FIELD OF THE INVENTION

The invention relates to park brake release mechanisms.

### BACKGROUND OF THE INVENTION

Park brake release mechanisms are known in the art. Typical release mechanisms include pull release mechanisms where an operator pulls a handle attached to a cable to unlock a park brake that has been engaged. Another known release mechanism includes a hand lever type release that is moved about a pivot to engage and disengage the park brake. The lever includes a button that is depressed to allow movement of the lever to engage and disengage the park brake.

Such brake levers include rod linkages coupled to the button to actuate the release mechanism and allow an operator to move the lever. The rod mechanisms contribute to the overall cost and complexity of a release mechanism, as well as adversely affect the packaging size and configuration of a release mechanism. Additionally, rod actuated release mechanisms may adversely affect the noise vibration and harshness of the release mechanisms. a State of the art release mechanism is described in EP 1418102 A2.

There is therefore a need in the art for a release mechanism that eliminates the need for complex rod linkages and has an improved noise vibration and harshness performance. There is also a need in the art for a release mechanism that has a push button release that moves lineally with respect to a release cable allowing connection to a cable directly. Also, there is a need in the art for a release mechanism that is cost effective and can be used on a variety of park brake systems. Finally, there is a need in the art for a release mechanism that improves the packaging of such systems and can be used on various brake levers, brake pedals and vehicle mounted push button release applications.

### SUMMARY OF THE INVENTION(S)

The invention is described in claim 1.

### BRIEF DESCRIPTION OF THE DRAWINGS

Figure 1 is an exploded perspective view of a brake assembly including the park brake release mechanism of the present invention;

Figure 2 is a partial perspective view of a release actuator in the locked position;

Figure 3 is a perspective view of a release actuator in the unlocked position;

Figure 4 is a perspective view of a release actuator without the release housing detailing engagement of the first spring with the release member;

Figure 5 is a perspective view of a brake component including a pawl and sector in the locked position;

Figure 6 is a perspective view of a brake component including a pawl and sector in the unlocked position;

Figure 7 is a perspective view of an alternative embodiment of a release mechanism having a brake handle having an integrally formed release housing;

Figure 8 is a side view alternative embodiment of a brake component including a pawl and sector;

Figure 9 is a perspective view alternative embodiment of a brake component including a pawl and sector;

Figure 10 is a perspective view of an alternative embodiment of a release mechanism having an integral push button and release member;

Figure 11 is a perspective view of the cable strand and release member of Figure 10;

Figure 12 is a perspective view of an alternative embodiment of a release mechanism having a push button and clutch actuated brake;

Figure 13 is a block diagram of a parking brake assembly.

### DETAILED DESCRIPTION OF THE PREFERRED EMBODIMENTS

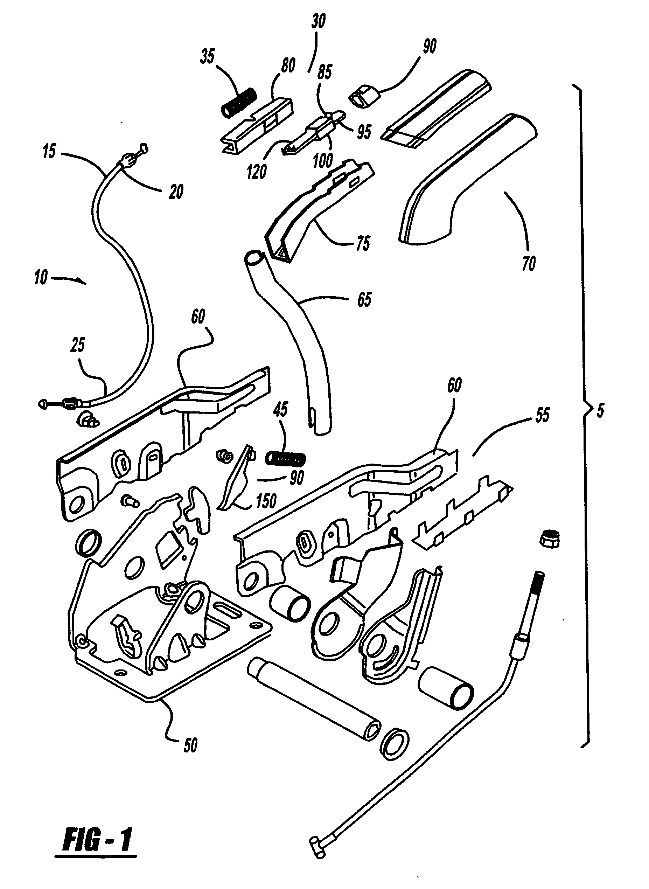

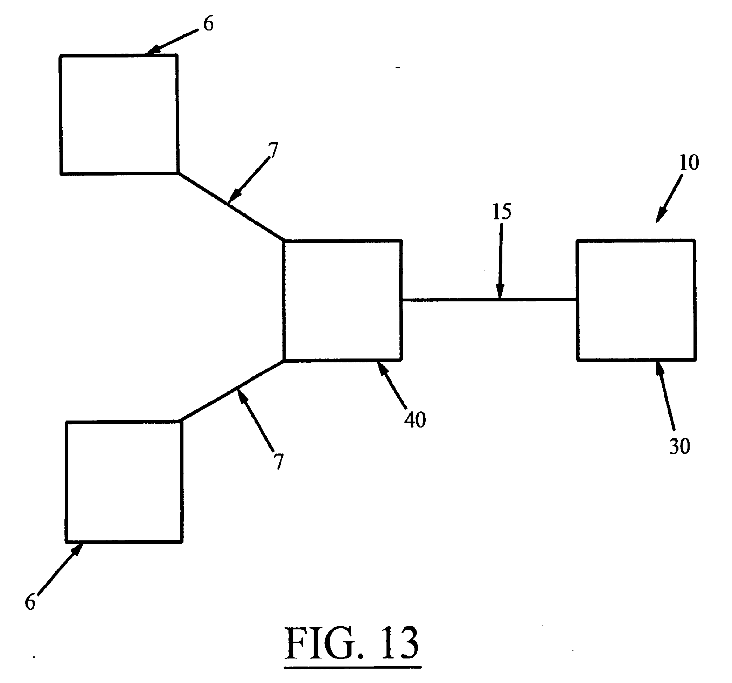

Referring to Figures 1 and 13, there is shown one embodiment of a brake assembly 5 including a parking brake release mechanism 10. The parking brake assembly 5 includes a main actuator assembly, such as a main cable 7 which controls a brake on a wheel 6 of a vehicle. This main cable 7 is distinguished from a release cable 15 that is not directly linked with the brake on a wheel 6, but is associated with a release mechanism 10.

The parking brake release mechanism 10 is movable between locked and unlocked positions and includes a release cable 15 having a strand 17 having first and second portions 20, 25. A release actuator 30 is coupled to the first portion 20 of the strand 17 and moves lineally with respect to the strand 17. A brake component 40 is coupled to the second portion 25 of the strand 17.

A first biasing member 35 positioned at the first portion 20 of the strand 17, with a spring being shown although other biasing members may be utilized, biases the parking brake release mechanism 10 to the locked position. A second biasing member 45, with a spring being shown although other biasing members may be utilized, is positioned at the second portion of the strand 17 and biases the parking brake release mechanism 10 to the unlocked position. The first biasing member 35 has a greater biasing force than the second biasing member 45 such that the parking brake release mechanism 10 is biased toward the locked position until an external force is applied to the first biasing member 35 allowing movement of the strand 17 toward the unlocked position in response to the biasing force of the second biasing member 45.

One embodiment of the brake assembly 5, as detailed in Figure 1 includes a mounting bracket 50 that is attached to a vehicle body. As shown, the embodiment is a hand brake; however, such a system could be modified to be a footbrake. A brake handle assembly 55 including a handle housing 60 is pivotally attached to the mounting bracket 50. The handle assembly has a longitudinal axis and includes a tube 65 connected to the handle housing 60. A handle grip 70 is disposed on an upper portion of the handle tube 65. The handle grip 70 includes a grip housing 75 disposed within the grip 70 and coupled to the handle tube 65. The handle grip 70 also includes a tip at the end of the handle grip.

The parking brake release mechanism 10 includes the release cable 15 at least partially disposed within the handle grip 70 and handle tube 65. As stated above, the release cable 15 includes a strand 17 having a first portion 20 coupled to the release actuator 30 and a second portion 25 coupled to the brake component 40.

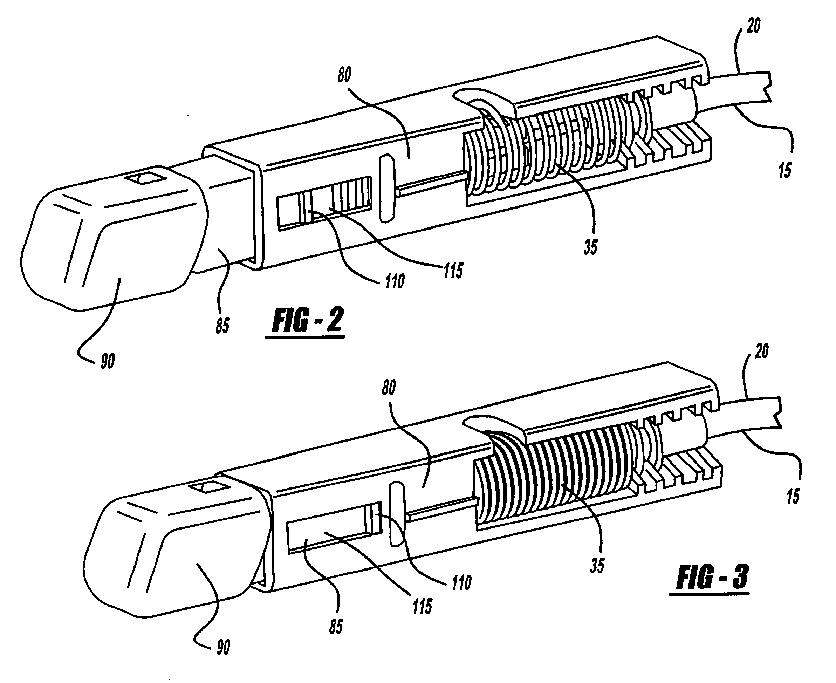

Referring to Figures 2 and 3, there is shown one embodiment of a release actuator 30 that may be utilized by the present invention. The release actuator 30 includes a release housing 80 disposed within the grip housing 75. A release member 85 is positioned within the release housing 80 and is capable of movement longitudinally within the release housing 80. The first biasing member 35 is positioned about the release member 85 and biases the release member 85 toward the locked position, as shown in Figure 2. The release actuator 30 may also include an end cap 90 positioned about a first portion 95 of the release member 85 that may be depressed by an operator of the vehicle to compress the first biasing member 35. The end cap 90 may alternatively be a push button as will be described in more detail below.

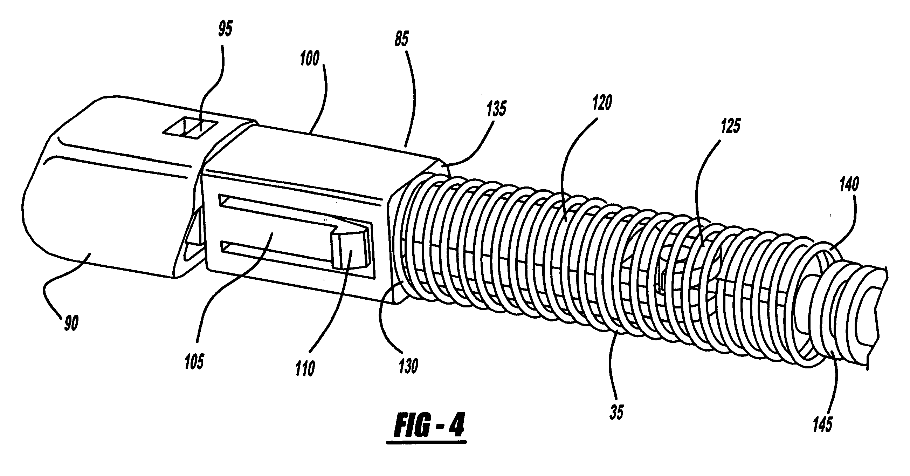

Referring to Figure 4, there is shown the release member 85 and first biasing member 35 without the release housing 80. The release member 85 includes a first portion 95 that is adapted to engage the end cap 90, as described above. The first portion 95 of the release member 85 also includes a guide portion 100 having a rectangular cross section in the pictured embodiment although other shapes may be utilized. The guide portion 100 also includes a spring arm 105 having a stop 110 that is received within a notch 115 formed in the release housing 80, as best shown in Figures 2 and 3. The stop 110 travels within the notch 115 and limits the amount of travel of the release member 85 within the release housing 80 to prevent excess compression of the first biasing member 35, as well as determine the amount of travel of strand 17. The release member 85 also includes a biasing member engaging portion 120 extending longitudinally from the guide portion 100. The biasing member engaging portion 120 includes a second portion 125 that is adapted to engage a fitting associated with the first portion 20 of the strand 17.

As can be seen in Figure 4, the first biasing member 35 is positioned about the biasing member engaging portion 120 of the release member 85. The first biasing member 35 includes a first portion 130 that abuts a face 135 defined by the transition from the guide portion 100 to the biasing member engaging portion 120 of the release member 85. The second portion 140 of the first biasing member 35 abuts an end face of one of a series of separated walls 126 formed on the interior of the release housing 80. The first biasing member 35 biases the release member 85 toward the locked position shown in Figure 2.

As best seen in Figures 2 and 3, the series of separated walls 126 define notches 128 that engage a conduit fitting 145 positioned at the first portion 20 of the release cable 15. The series of separated walls 126 allow the conduit fitting 145 to be adjusted to different positions to adjust the length of the cable 15. The conduit fitting 145 may be positioned in any of the notches 128 to take up or pay out the cable 15 as needed.

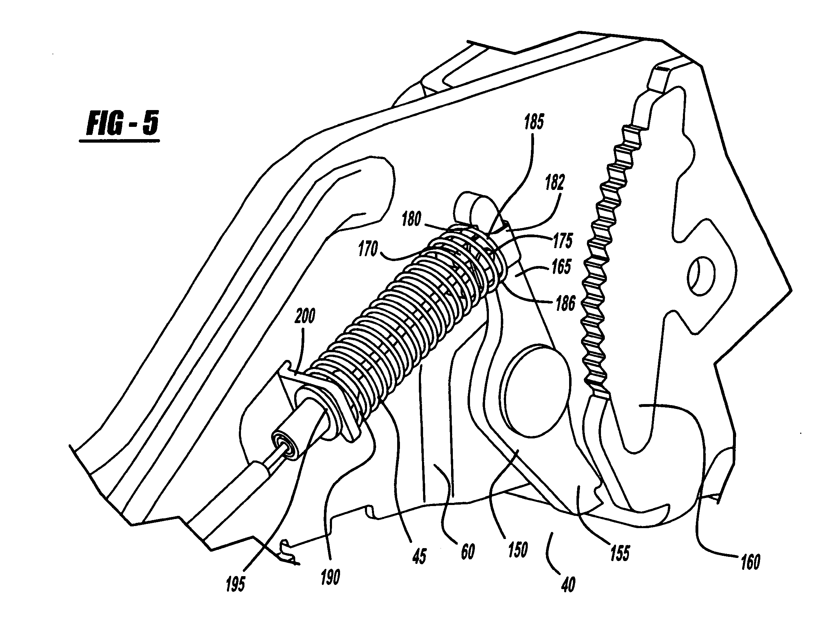

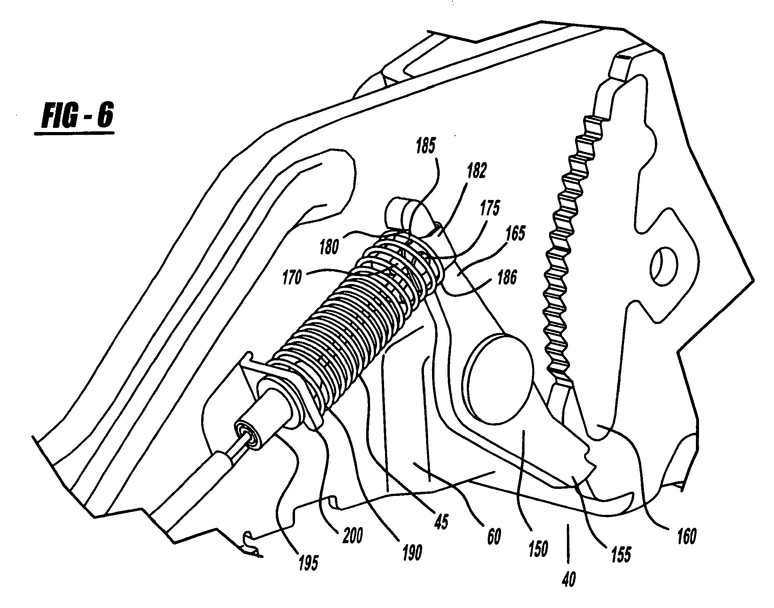

The parking brake release mechanism 10 may also include a brake component 40, detailed in Figures 5 and 6, that is coupled to the second portion 25 of the strand 17. The brake component 40 in the depicted embodiment includes a pawl 150 that is pivotally coupled to the handle housing 60. The pawl 150 includes a first portion 155 that is adapted to engage a sector 160 connected with the mounting bracket 50. The pawl 150 also includes a second portion 165 that includes a connection portion 170 that is sized and shaped to engage an end fitting 175 associated with the second portion 25 of the strand 17. In one aspect, the end fitting 175 is received within the connection portion 170 and a retainer clip 182 is positioned about the pawl 150 and engages the end fitting 175 to securely retain the end fitting 175 within the connection portion 170 of the pawl 150. It should be realized that alternative structures for attaching the strand 17 to the pawl 150 may be utilized. The pawl 150 also includes a pair of notches 180 formed about the connection portion 170 that are sized and positioned to allow the second biasing member 45 to seat against the pawl 150 at a first portion 185 of the second biasing member 45. As can be seen in Figures 5 and 6, the second biasing member 45 is disposed about the connection portion 170 of the pawl 150 and is seated within the notches 180 formed on the pawl 150 at a first portion 185 of the second biasing member 45. A second portion 190 of the second biasing member 45 engages a cable fitting 195 associated with the second portion 25 of the release cable 15 or alternatively could associate with any fixed flange or surface. The cable fitting 195 is fixed using any suitable structure. In the depicted embodiment, the cable fitting 195 is mounted on a tab 200 that extends from the handle housing 60. In this manner, the second biasing member 45 is retained and applies a biasing force to the pawl 150 for pivotal movement of the pawl 150 about the handle housing 60.

In use, an operator presses on the end cap 90 causing the release member 85 to travel within the release housing 80 a specified distance, as determined by the length of the notch 115 formed in the release housing 80 that engages the tab 110 formed on the release member 85. As a result of movement of the release member 85 from the locked position shown in Figure 2 to the unlocked position shown in Figure 3, the first biasing member 35 is compressed allowing movement of the strand 17 against the otherwise present biasing force of the first biasing member 35.

At the second portion 25 of strand 17, the second biasing member 45 is compressed in the locked position, as shown in Figure 5, due to the greater force of the first biasing member pulling the strand 17 toward the first portion 20 and causing pivotal movement of the pawl 150 such that it engages the sector 160 preventing pivotal movement of the handle housing 60 about the mounting bracket 50. When the release member 85 is moved from the locked position shown in Figure 2 to the unlocked position shown in Figure 3, the second biasing member 45 is then free to expand, as shown in Figure 6, causing pivotal movement of the pawl 150 with respect to the handle housing 60. In this manner, the pawl 150 disengages the sector 160 allowing for pivotal movement of the handle housing 60 about the mounting bracket 50. As stated above, the balance of spring forces where the first biasing member 35 has a greater biasing force than the second biasing member 45 allows for the release mechanism 10 to be maintained in the locked position until an external force is applied compressing the first biasing member 35 and allowing the stored energy within the second biasing member 45 to pivot the pawl 150 away from the sector 160 allowing pivotal movement of the handle housing 60 with respect to the mounting bracket 50.

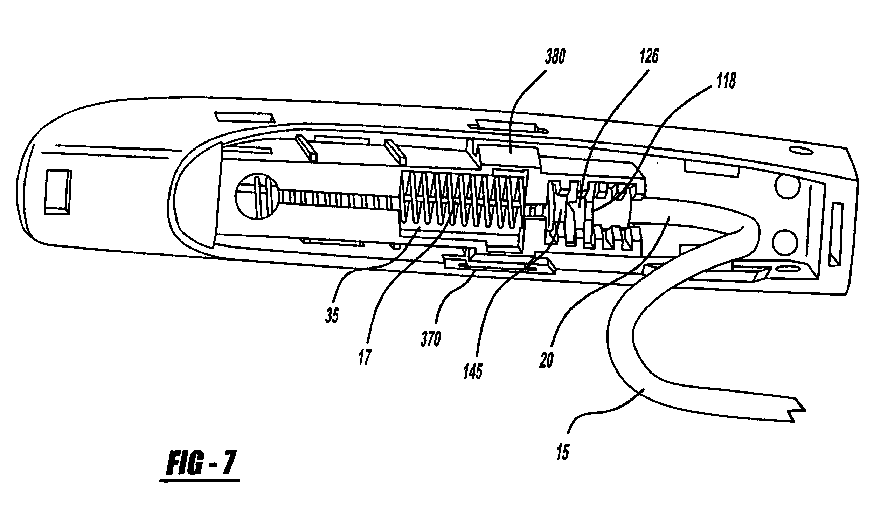

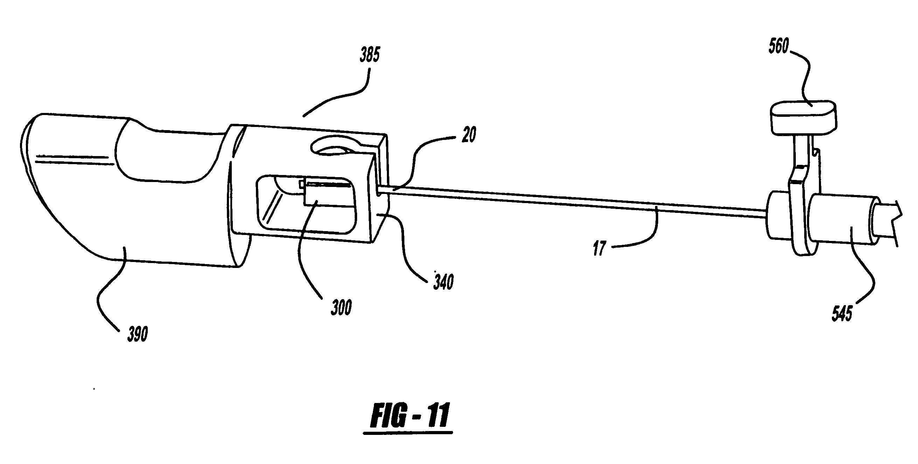

In an alternative embodiment shown in Figure 7, the handle grip 370 may include an integrally formed release housing 380. Similar to the above described embodiment, the release actuator moves lineally with respect to the strand 17. As with the previously described embodiment, the release housing 380 may include the series of separated walls 126 defining notches 128 that engage a conduit fitting 145 positioned at the first portion 20 of the release cable 15 or the release housing 380 may include a single notch for attaching to the conduit fitting 145. However, the release member 385 may be of a different configuration than that previously described. The release member 385 may be similar to that depicted in Figure 11. The release member 385 shown in Figure 11 includes a push button portion 390 and a guide portion 300. The first portion 20 of the strand 17 is connected to the guide portion 300 of the release member 385. The first biasing member 35 associates with an end face 340 of the release member 385 at the first portion of the biasing member 35 and associates with a face of the series of separated walls 126 at a second portion of the biasing member 35. The strand 17 passes through the biasing member 35 to connect with the guide portion 300. The alternative embodiment operates in the same manner as that described above.

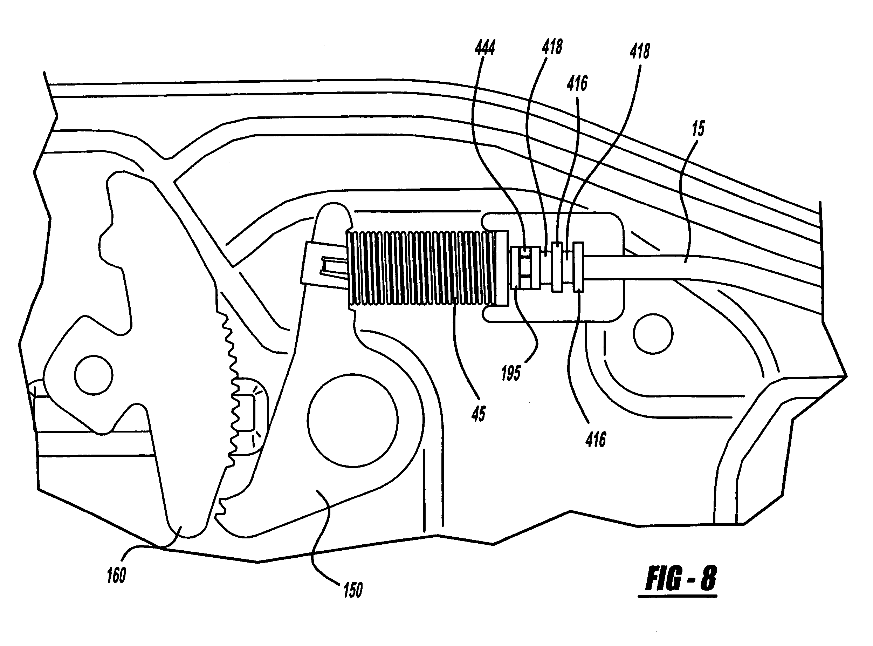

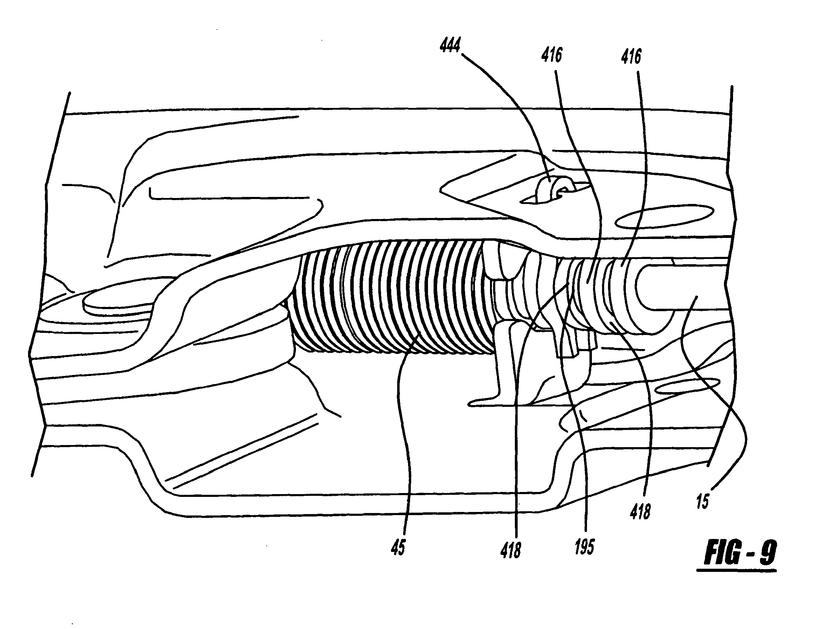

Another alternative embodiment of a release mechanism 10 is shown in Figures 8 and 9. In the depicted embodiment the cable end fitting 195 is at the second portion 25 of the strand 17 associated with the brake component 40. As with the previously described embodiment the brake component 40 may include a pawl 150 and sector 160. The second biasing member 45 acts as above and biases the pawl 150 out of engagement from the sector 150 when a force is applied overcoming the first biasing member 35. The second biasing member 45 is seated on the pawl 150 and the end fitting 195, as described above. However, the end fitting 195 includes a series of separated walls 416 that define notches 418. A fixed clip 444, as best shown in Figure 9 can engage different notches 418 to adjust a length of the cable 15. The series of notches 418 may be used with or with out the series of notches 118 described above at the first portion 20 of the strand 17 to adjust the cable length at either portion of the cable 15.

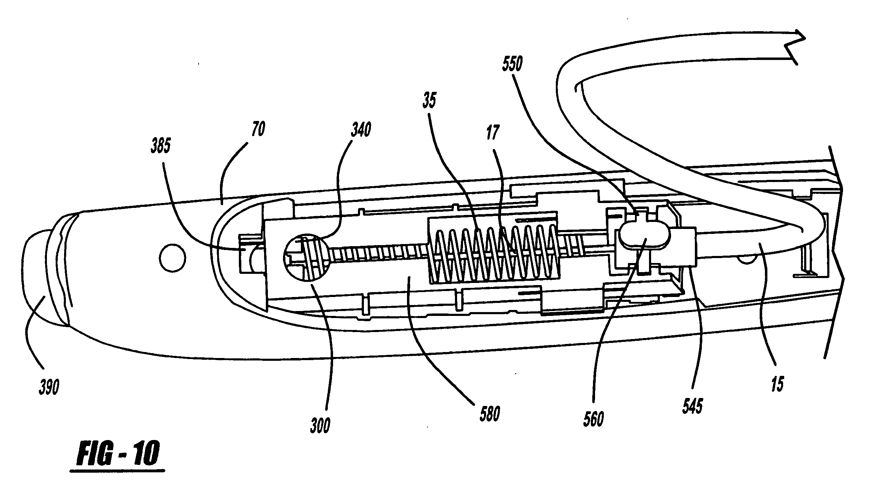

Another alternative embodiment is shown in Figures 10 and 11. The release housing 580 is similar to that described above in Figure 7 except that it is not integrally formed with the handle 70. The release member 385 is the same as that described above with the respect to Figure 11 and includes a push button portion 390 and a guide portion 300. The first portion 20 of the strand 17 is connected to the guide portion 300 of the release member 385. The first biasing member 35 associates with an end face 340 of the release member 385 at the first portion of the biasing member 35 and associates with an end face of the release housing 580 at the second portion of the first biasing member 35. The embodiment shown in Figure 10 includes a single notch 550 formed in the release housing 580 to receive a conduit end fitting 545. The conduit end fitting 545 includes a contact portion 560 for pushing it into the notch 550.

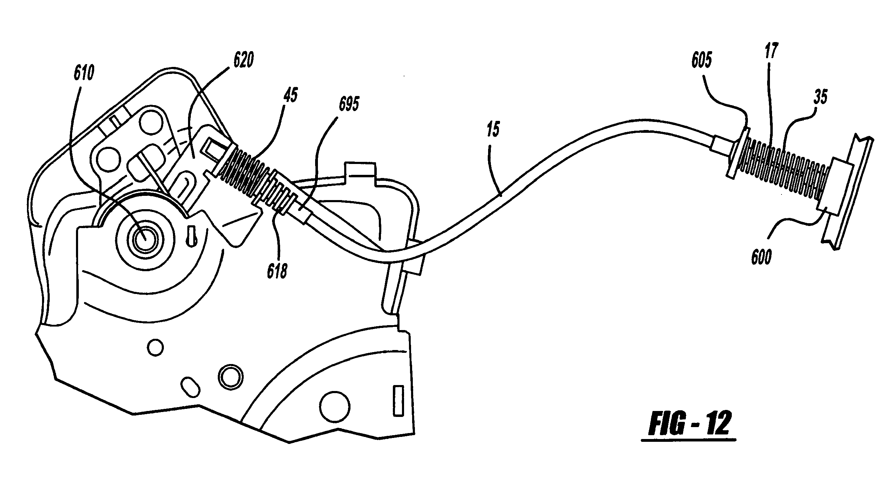

Referring to Figure 12 there is shown another alternative embodiment. The release actuator 30 is a push button actuator that is disposed on a surface of a vehicle. In one aspect the push button 600 may be positioned on a control panel of a vehicle. The first portion of the strand 17 is connected to the push button 600. A first biasing member 35 associates with the push button 600 at a first portion of the first biasing member 35 and associates with an engagement surface 605 at a second portion of the first biasing member 35 for moving the release mechanism 10 to a locked position. The brake component 40 includes a clutch 610 moveable to lock and unlock the release mechanism 10. The clutch 610 includes a lever 620 connected to the second portion of the strand 17. The second portion of the cable includes a fixedly retained conduit fitting 695 similar to that described above. A second biasing member 45 has a first portion associating with the lever 620 and a second portion associating with a face of the conduit end fitting 695 for moving the release mechanism 10 to the unlocked position. As with the previously described embodiment of Figures 8 and 9 a length of the cable can be adjusted by positioning in various notches 618 formed in the conduit fitting 695.

While the parking brake release mechanism 10 has been described with respect to various brake assemblies including a pawl 150 that engages a sector 160, other parking brake designs may be utilized with the release mechanism 10 of the present invention. For example, the parking brake release mechanism 10 having a first biasing member 35 having a greater biasing force than a second biasing member 45 disposed on opposing portions of a release cable 15 may be used on both self adjust and manual adjust designs, as well as torsion lock designs. U.S. Patent Nos. 5,588,335; 5,309,786; 5,832,784; 5,907,977 disclose torsion lock designs and are commonly owned by the assignee of the present application and are herein incorporated by reference. The torsion lock design may utilize a release cable 15 in the same manner described with respect to the pawl 150 and sector 160 design disclosed above. In such a design, the first biasing member 35 again would have a greater force than a second biasing member 45 associated with the torsion lock of the brake assembly. In such a design, an external force exceeding the first biasing member 35 would need to be applied to allow the biasing force of the second biasing member 45 to release the torsion lock allowing for actuation of a parking brake.

The invention has been described in an illustrative manner. It is to be understood that the terminology which has been used is intended to be in the nature of words of description rather than limitation. Many modifications and variations of the invention are possible in light of the above teachings. Therefore, within the scope of the appended claims, the invention may be practiced other than as specifically described.

## Claims

1. A parking brake release mechanism (10) comprising:
• a release cable (15) including a strand (17) having first and second portions (20, 25);
• a release actuator (30) connected to the first portion (20) of the strand (17); **characterized in that** the parking brake release mechanism further comprises
• a brake component (40) directly connected to the second portion (25) of the strand (17);
the release actuator (30) positioned to move lineally with respect to the strand (17) for locking and unlocking the brake component (40).

2. A parking brake release mechanism of claim 1 including a first biasing member (35) associated with the first portion of the strand and a second biasing member (45) associated with the second portion of the strand, wherein the first biasing member (35) has a greater biasing force to the strand than the second biasing member (45) such that the parking brake release mechanism (10) is biased toward a locked position until an external force is applied to the first biasing member (35) allowing movement of the strand (17) toward the unlocked position in response to the biasing force of the second biasing member (45).

3. The parking brake release mechanism of claims 1 and 2 wherein the release cable (15) is flexible and biased between two positions to form a push-pull cable actuator.

4. The parking brake release mechanism (10) of claims 1 and 2 wherein the release actuator (30) includes a brake handle assembly (55) having a longitudinal axis, a handle portion and a tip and a push button actuator positioned to be accessed from the tip of the brake handle assembly along the longitudinal axis, the push button connected to the first portion (20) of the strand (17).

5. The parking brake release mechanism (10) of claims 1 and 2 wherein the release actuator (30) is a push button actuator disposed on a control panel of a vehicle.

6. The parking brake release mechanism (10) of claim 5 wherein the first biasing member (35) is associated with the push button (600) at a first portion of the biasing member and associated with an engagement surface (605) at a second portion of the first biasing member (35) for moving the release mechanism to the locked position.

7. The parking brake release mechanism (10) of claims 1 and 2 wherein the brake component (40) includes a clutch (610) moveable to lock and unlock the release mechanism.

8. The parking brake release mechanism (10) of claim 7 including a second biasing member (45) having a first portion associated with the lever (620) and a fixed second portion for moving the release mechanism to the unlocked position.

9. The parking brake release mechanism (10) of claims 1 and 2 wherein the brake component (40) includes a pawl (150) pivotal about a housing.

10. The parking brake release mechanism (10) of claims 1 and 2 including a conduit fitting (695) having a series of separated walls (416) formed on the conduit fitting and a retained clip (444), the retained clip engaging different notches (418) defied by the series of separated walls (416) for adjusting a length of the cable (15).

11. The parking brake release mechanism (10) of claim 9 including a second biasing member (45) having a first portion associated with the pawl (150) and a fixed second portion for moving the release mechanism (10) to an unlocked position.

12. The parking brake release mechanism (10) of claims 1 and 2 wherein the release member (85) includes a push button portion (390) and a guide portion (300) and wherein a first biasing member (35) associates with an end face (340) of the guide portion at a first portion (130) of the biasing member and associates with an end face of the release housing (380) at a second portion of the first biasing member (35) for moving the release mechanism (10) to the locked position.

13. The parking brake release mechanism (10) of claim 12 wherein the guide portion (300) includes a stop (110) for regulating the amount of travel of the strand (17).

14. The parking brake release mechanism (10) of claim 12 wherein the release member (385) includes a biasing member engaging portion (120) extending longitudinally from the guide portion (300).

15. The parking brake release mechanism (10) of claim 14 wherein the first biasing member (35) is disposed about the biasing member engaging portion (120).

## Patentansprüche

1. Feststellbremsen-Lösemechanismus (10), der umfasst:
• ein Lösekabel (15), das eine Litze (17) mit einem ersten und mit einem zweiten Abschnitt (20, 25) enthält;
• einen Löseaktuator (30), der mit dem ersten Abschnitt (20) der Litze (17) verbunden ist;
**dadurch gekennzeichnet, dass** der Feststellbremsen-Lösemechanismus ferner umfasst:
• eine Bremsenkomponente (40), die direkt mit dem zweiten Abschnitt (25) der Litze (17) verbunden ist;
wobei der Löseaktuator (30) so positioniert ist, dass er sich in Bezug auf die Litze (17) linear bewegt, um die Bremsenkomponente (40) zu verriegeln und zu entriegeln.

2. Feststellbremsen-Lösemechanismus gemäß Anspruch 1, der ein erstes Vorbelastungselement (35), das dem ersten Abschnitt der Litze zugeordnet ist, und ein zweites Vorbelastungselement (45), das dem zweiten Abschnitt der Litze zugeordnet ist, enthält, wobei das erste Vorbelastungselement (35) eine höhere Vorbelastungskraft auf die Litze als das zweite Vorbelastungselement (45) aufweist, sodass der Feststellbremsen-Lösemechanismus (10) in Richtung einer verriegelten Stellung vorbelastet ist, bis auf das erste Vorbelastungselement (35) eine äußere Kraft ausgeübt wird, die die Bewegung der Litze (17) in Ansprechen auf die Vorbelastungskraft des zweiten Vorbelastungselements (45) in Richtung der verriegelten Stellung zulässt.

3. Feststellbremsen-Lösemechanismus gemäß Anspruch 1 und 2, bei dem das Lösekabel (15) biegsam und zwischen zwei Stellungen vorbelastet ist, um einen Druck-Zug-Kabelaktuator zu bilden.

4. Feststellbremsen-Lösemechanismus (10) gemäß Anspruch 1 und 2, bei dem der Löseaktuator (30) eine Bremsengriffbaueinheit (55) mit einer Längsachse enthält, wobei ein Griffabschnitt und eine Spitze und ein Druckknopfaktuator so positioniert sind, dass auf sie von der Spitze der Bremsengriffbaueinheit entlang der Längsachse zugegriffen werden kann, wobei der Druckknopf mit dem ersten Abschnitt (20) der Litze (17) verbunden ist.

5. Feststellbremsen-Lösemechanismus (10) gemäß Anspruch 1 und 2, bei dem der Löseaktuator (30) ein Druckknopfaktuator ist, der an einem Armaturenbrett eines Fahrzeugs angeordnet ist.

6. Feststellbremsen-Lösemechanismus (10) gemäß Anspruch 5, bei dem das erste Vorbelastungselement (35) bei einem ersten Abschnitt des Vorbelastungselements dem Druckknopf (600) zugeordnet ist und bei einem zweiten Abschnitt des ersten Vorbelastungselements (35) einer Eingriffsoberfläche (605) zugeordnet ist, um den Lösemechanismus in die verriegelte Stellung zu bewegen.

7. Feststellbremsen-Lösemechanismus (10) gemäß Anspruch 1 und 2, bei dem die Bremsenkomponente (40) eine Kupplung (610) enthält, die zum Verriegeln und Entriegeln des Lösemechanismus beweglich ist.

8. Feststellbremsen-Lösemechanismus (10) gemäß Anspruch 7, der ein zweites Vorbelastungselement (45) enthält, das einen ersten Abschnitt, der dem Hebel (620) zugeordnet ist, und einen festen zweiten Abschnitt zum Bewegen des Lösemechanismus in die entriegelte Stellung aufweist.

9. Feststellbremsen-Lösemechanismus (10) gemäß Anspruch 1 und 2, bei dem die Bremsenkomponente (40) eine Sperrklinke (150) enthält, die um ein Gehäuse drehbar ist.

10. Feststellbremsen-Lösemechanismus (10) gemäß Anspruch 1 und 2, der ein Rohranschlussstück (695) mit einer Reihe getrennter Wände (416), die an dem Rohranschlussstück gebildet sind, und eine Halteklemme (444) enthält, wobei die Halteklemme mit unterschiedlichen Rasten (418) in Eingriff ist, die durch die Reihe getrennter Wände (416) definiert sind, um eine Länge des Kabels (15) einzustellen.

11. Feststellbremsen-Lösemechanismus (10) gemäß Anspruch 9, der ein zweites Vorbelastungselement (45) mit einem ersten Abschnitt, der der Sperrklinke (150) zugeordnet ist, und mit einem festen zweiten Abschnitt zum Bewegen des Lösemechanismus (10) in eine entriegelte Stellung enthält.

12. Feststellbremsen-Lösemechanismus (10) gemäß Anspruch 1 und 2, bei dem das Löseelement (85) einen Druckknopfabschnitt (390) und einen Führungsabschnitt (300) enthält und bei dem ein erstes Vorbelastungselement (35) bei einem ersten Abschnitt (130) des Vorbelastungselements einer Stirnfläche (340) des Führungsabschnitts zugeordnet ist und bei einem zweiten Abschnitt des ersten Vorbelastungselements (35) einer Stirnfläche des Lösegehäuses (380) zugeordnet ist, um den Lösemechanismus (10) in die verriegelte Stellung zu bewegen.

13. Feststellbremsen-Lösemechanismus (10) gemäß Anspruch 12, bei dem der Führungsabschnitt (300) einen Anschlag (110) zum Regulieren der Lauflänge der Litze (17) enthält.

14. Feststellbremsen-Lösemechanismus (10) gemäß Anspruch 12, bei dem das Löseelement (385) einen Vorbelastungselement-Eingriffsabschnitt (120) enthält, der in Längsrichtung von dem Führungsabschnitt (300) ausgeht.

15. Feststellbremsen-Lösemechanismus (10) gemäß Anspruch 14, bei dem das erste Vorbelastungselement (35) um den Vorbelastungselement-Eingriffsabschnitt (120) angeordnet ist.

## Revendications

1. Mécanisme de desserrage (10) de frein de stationnement comprenant :
un câble de desserrage (15) comprenant un brin (17) ayant des première et deuxième parties (20, 25) ;
un actionneur de desserrage (30) raccordé à la première partie (20) du brin (17) ;
**caractérisé en ce que** le mécanisme de desserrage de frein de stationnement comprend en outre :
un composant de frein (40) directement raccordé à la deuxième partie (25) du brin (17) ;
l'actionneur de desserrage (30) étant positionné pour se déplacer de manière linéaire par rapport au brin (17) afin de bloquer et débloquer le composant de frein (40).

2. Mécanisme de desserrage de frein de stationnement selon la revendication 1, comprenant un premier élément de sollicitation (35) associé à la première partie du brin et un deuxième élément de sollicitation (45) associé à la deuxième partie du brin, dans lequel le premier élément de sollicitation (35) a une plus grande force de sollicitation sur le brin que le deuxième élément de sollicitation (45), de sorte que le mécanisme de desserrage (10) de frein de stationnement est sollicité vers une position bloquée jusqu'à ce qu'une force externe soit appliquée sur le premier élément de sollicitation (35) permettant le mouvement du brin (17) vers la position débloquée en réponse à la force de sollicitation du deuxième élément de sollicitation (45).

3. Mécanisme de desserrage de frein de stationnement selon les revendications 1 et 2, dans lequel le câble de desserrage (15) est souple et sollicité entre deux positions afin de former un actionneur de câble de poussée-traction.

4. Mécanisme de desserrage (10) de frein de stationnement selon les revendications 1 et 2, dans lequel l'actionneur de desserrage (30) comprend un ensemble de levier de frein à main (55) ayant un axe longitudinal, une partie de levier et une pointe et un actionneur de bouton poussoir positionné pour pouvoir être accessible à partir de la pointe de l'ensemble de levier de frein à main le long de l'axe longitudinal, le bouton poussoir étant raccordé à la première partie (20) du brin (17).

5. Mécanisme de desserrage (10) de frein de stationnement selon les revendications 1 et 2, dans lequel l'actionneur de desserrage (30) est un actionneur de bouton poussoir disposé sur un tableau de commande d'un véhicule.

6. Mécanisme de desserrage (10) de frein de stationnement selon la revendication 5, dans lequel le premier élément de sollicitation (35) est associé au bouton poussoir (600) au niveau d'une première partie de l'élément de sollicitation et associé avec une surface de coopération (605) au niveau d'une deuxième partie du premier élément de sollicitation (35) pour déplacer le mécanisme de desserrage dans la position bloquée.

7. Mécanisme de desserrage (10) de frein de stationnement selon les revendications 1 et 2, dans lequel le composant de frein (40) comprend un embrayage (610) mobile pour bloquer et débloquer le mécanisme de desserrage.

8. Mécanisme de desserrage (10) de frein de stationnement selon la revendication 7, comprenant un deuxième élément de sollicitation (45) ayant une première partie associée au levier (620) et une deuxième partie fixe pour déplacer le mécanisme de desserrage dans la position débloquée.

9. Mécanisme de desserrage (10) de frein de stationnement selon les revendications 1 et 2, dans lequel le composant de frein (40) comprend un cliquet (150) pouvant pivoter autour d'un boîtier.

10. Mécanisme de desserrage (10) de frein de stationnement selon les revendications 1 et 2, comprenant un raccord de conduit (695) ayant une série de parois séparées (416) formées sur le raccord de conduit et une attache retenue (444), l'attache retenue coopérant avec différentes encoches (418) définies par la série de parois séparées (416) pour ajuster une longueur du câble (15).

11. Mécanisme de desserrage (10) de frein de stationnement selon la revendication 9, comprenant un deuxième élément de sollicitation (45) ayant une première partie associée au cliquet (150) et une deuxième partie fixe pour déplacer le mécanisme de desserrage (10) dans une position débloquée.

12. Mécanisme de desserrage (10) de frein de stationnement selon les revendications 1 et 2, dans lequel l'élément de desserrage (85) comprend une partie de bouton poussoir (390) et une partie de guidage (300) et dans lequel le premier élément de sollicitation (35) s'associe avec une face d'extrémité (340) de la partie de guidage au niveau d'une première partie (130) de l'élément de sollicitation et s'associe avec une face d'extrémité du boîtier de desserrage (380) au niveau d'une deuxième partie du premier élément de sollicitation (35) pour déplacer l'élément de desserrage (10) dans la position bloquée.

13. Mécanisme de desserrage (10) de frein de stationnement selon la revendication 12, dans lequel la partie de guidage (300) comprend une butée (110) pour réguler la quantité de déplacement du brin (17).

14. Mécanisme de desserrage (10) de frein de stationnement selon la revendication 12, dans lequel l'élément de desserrage (385) comprend une partie de coopération (120) avec l'élément de sollicitation s'étendant longitudinalement à partir de la partie de guidage (300).

15. Mécanisme de desserrage (10) de frein de stationnement selon la revendication 14, dans lequel le premier élément de sollicitation (35) est disposé autour de la partie de coopération (120) avec l'élément de sollicitation.
